# EUROPEAN PATENT APPLICATION

(11) **EP 3 970 879 A1**
(43) Date of publication of application: **23.03.2022**
(21) Application number: 20020417.0
(22) Date of filing: 17.09.2020
(51) Int. Cl.: B22F 3/105, B23K 10/02, B33Y 10/00, B33Y 30/00

(54) **SYSTEM AND METHOD FOR ADDITIVE MANUFACTURING**

(71) Applicant: Linde GmbH, 82049 Pullach (DE)
(72) Inventor: Fieret, Jacob, Basingstoke, RG24 9NY (GB); Coroado, Julio, Finedon, Wellingborough NN9 5EN (GB)
(74) Representative: Lu, Jing

(57) **Abstract**

The present invention relates to an apparatus and method for manufacturing components by directed energy deposition (DED), in which a sacrificial cooling structure is built on the component during the DED process. A cooling gas flows through one or more enclosed channels in the cooling structure to cool the component.

## Description

### TECHNICAL FIELD

The present invention relates generally to a system and method for use in additive manufacturing processes. In particular, but not exclusively, the present invention relates to directed energy deposition additive manufacturing processes.

### INTRODUCTION

Additive manufacturing can be carried in various manners using a variety of heat sources and materials. The present invention is related to additive manufacturing using a metal wire or powder as the feedstock material and a laser, an electron beam or an arc as a heat source that melts the feedstock material as it is deposited.

This broad family of processes is often referred to as "directed energy deposition", or DED. In particular, one method of DED for which the present invention is particularly well-suited is wire arc additive manufacturing, in which the feedstock material is a wire and the heat source is an electrical arc.

DED-manufactured components are so-called near-net shape parts, and generally require a final round of conventional subtractive machining (removal of material) to achieve the required dimensions.

DED processes often use a process gas, directed coaxially or off-axis with a nozzle towards the arc or laser focus, in order to prevent air from reducing the quality of the built component through the effects that oxygen, nitrogen and moisture can have on the fusion process of the wire or powder under the high temperatures that are generated in order to melt and fuse the powder or wire. The depending on the material used, the process gas can be an inert gas (e.g. argon, nitrogen), or a mixture of an inert gas with an active component in order to achieve certain effects (e.g. hydrogen).

There are instances where components built with DED retain their heat for a considerable time, for example in the case of tall, thin walls where the heat cannot diffuse quickly to the base plate, in particular if the metal used has a poor thermal conductivity. In such cases heat loss is effected mainly through natural convection through the surrounding gas, or by forced cooling using jets of gas at various locations.

However, this is not appropriate in all cases and in particular where the metal is highly reactive, such as titanium. In such cases, the metal remains hot enough for chemical reactions with any nitrogen and oxygen present in the manufacturing space for a considerable time. Hence not only is a suitable process gas is required, but also the entire build chamber must be filled with process gas having a very low concentration of gas species that react with the metal. Cooling takes place through natural convection or through forced ventilation for example by means of a fan, or recycled and cooled process gas directed towards the component through nozzles.

This type of cooling is often not adequate as it is localised and not homogeneous and will require frequent adjustment of nozzles as the built progresses. Furthermore, maintaining the required low concentration of oxygen or other reactive gas species may not be practical.

It is an object of this invention to provide an apparatus and a method for efficiently cooling the structures during the directed energy deposition additive manufacturing process.

### SUMMARY OF THE INVENTION

According to an aspect of the invention for which protection is sought, there is provided a method for producing a component by a directed energy deposition additive manufacture process, the method comprising the steps of:
depositing a plurality of layers of feedstock material onto a base plate and melting the feedstock material as it is deposited, thereby to form an initial structure, wherein the initial structure includes a sacrificial cooling structure having at least one enclosed channel;
providing a cooling gas through enclosed channel of the sacrificial cooling structure; and
removing the sacrificial cooling structure from the initial structure to form the component.

Advantageously, the presence of the sacrificial cooling structure allows to provide a reproducible process of cooling the components produced by the DED method. As will be well understood by the skilled person, improving the deposition rate during additive manufacturing process can be achieved by using a fan inside the process chamber or by cooling the base plate, with both methods having their drawbacks. The presence of the sacrificial cooling structure, in combination with at least one channel passing though the structure, allows for evenly applied cooling along the component.

In an embodiment, the feedstock material comprises a wire. In another embodiment, the feedstock material is melted by an electrical arc. The present invention has been found to be particularly effective for DED processes in which the feedstock material is a wire and the heat source is an arc. Such processes are sometimes referred to as wire arc additive manufacture (WAAM) processes.

In yet another embodiment, the cooling gas is supplied to the enclosed channel through an opening in a base plate. Advantageously, supplying the cooling gas through the channel in the base plate allows to prevent the buildup of heat. This is particularly advantageous when the shape of the component being built does not allow efficient heat dissipation, for instance in the component with thin tall walls, where the heat cannot diffuse quickly to the base plate.

In an embodiment, the cooling gas is a process gas. Advantageously, this allows for more efficient and economic usage of the process gas. The process gas is normally used to reduce oxygen levels in the processing chamber in order to avoid undesired reaction with the metal during manufacturing. The gas is purged through the process chamber and is either recirculated or supplied continuously. Using the process gas as a cooling medium to cool down the component has a double advantage of decreasing oxidation and reducing the cost of manufacturing by taking away the heat from the component during the process, thus increasing manufacturing speed.

In another embodiment, the cooling gas is a cryogenic gas.

In yet another embodiment, the cooling gas is any one of argon, helium or nitrogen. Advantageously, this allows for reduction of the surface oxide layer and, in turn, leads to more pure manufactured components.
In an embodiment, the sacrificial cooling structure is removed by machining the sacrificial cooling structure away from the manufactured part. This results in producing a component without the stress and distortion due to excess temperature gradient.

In an embodiment, the feedstock material is titanium, stainless steel, aluminium or an alloy of titanium, stainless steel or aluminium. Advantageously, this allows to manufacture wide range of components using materials with different thermal conductivity, and different mechanical properties (hardness, toughness and resilience, malleability, plasticity etc).

In another embodiment, the cooling gas is recirculated in the manufacturing space by means of a pump. In yet another embodiment, the cooling gas is further cooled by a heat exchanger. Advantageously, this allows to enhance the cooling properties of the process gas and thus to maximize the heat transfer away from the manufactured part. Furthermore, the cooling can be integrated into the purity control of the DED installation.

According to an aspect of the present invention, an apparatus for producing components by a directed energy deposition additive manufacturing process, the apparatus comprising:
- a manufacturing space, said space further comprising a base plate,
- a heat source,
- a source of feedstock material,
- a source of cooling gas,
- a controller that is arranged to control the manufacturing process,
wherein the base plate comprises an opening for providing the cooling gas into the manufacturing space via a sacrificial cooling structure on the component.
Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described by way of example only, with reference to the accompanying figures, in which:
Figure 1 shows a system for making components by additive manufacture;
Figure 2A shows a rough schematic view of a partially manufactured component comprising a sacrificial cooling structure according to an embodiment of the present invention;
Figure 2B shows a cross section through the component shown in figure 2A;
Figures 3A-3C. show a rough schematic view of the stages of the process of building a component in an embodiment of the present invention;
Figure 4 shows a hybrid manufacturing system in an embodiment of the present invention; and
Figure 5 shows a flow chart illustrating a method of producing a component in an embodiment of the present invention.

### DETAILED DECSRIPTION

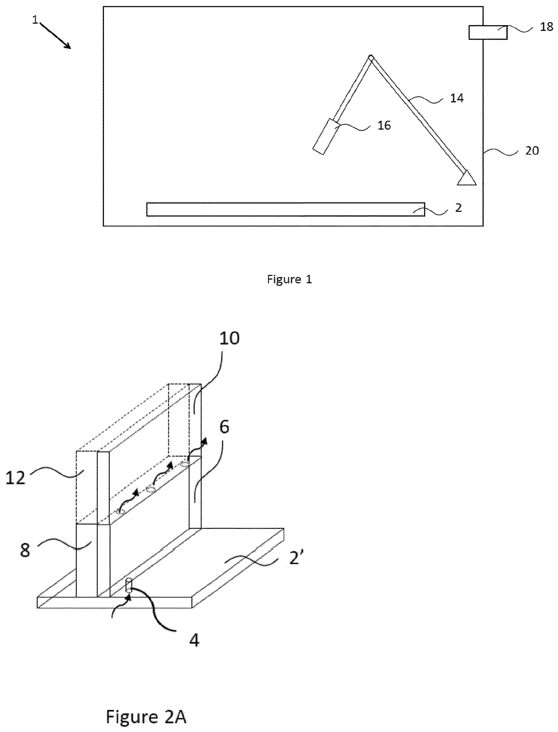

Figure 1 shows a system 1 for making components using a directed energy deposition (DED) method of additive manufacture. The system 1 comprises a manufacturing space bounded by an enclosure 20. A base plate 2 is located at the bottom of the manufacturing space. The system also comprises a deposition head 16 comprising a source of feedstock material, which is preferably wire, and an energy source arranged to melt the feedstock material as it is deposited. The energy source preferably comprises an electrical arc, but in some embodiments the energy source may be a laser or an electron beam. The position of the deposition head 16 is controlled by a robot arm 14, which is itself controlled by an electronic controller (not shown). An atmospheric conditioning subsystem 18 is also provided to ensure that the atmosphere within the manufacturing space is appropriate given the materials to be used to manufacture a component within the manufacturing space. The atmospheric conditioning subsystem may comprise a source of an inert process gas, which may nitrogen, hydrogen, argon, or any other suitable process gas or mixture of process gases. The process gas will be selected based on various criteria, including low reactivity with the materials to be used in the manufacturing process.

As will be well understood by the skilled person, a system 1 as shown in figure 1 may be used to manufacture components by sequentially depositing layers of molten material on top of the base plate 2 until the component is formed in the desired shape. A final machining step will generally be required to remove the component from the base plate 2 and achieve the required dimensional tolerance for the finished component.

Although the molten material will solidify soon after deposition, the structure remains very hot during the manufacturing process, especially for relatively tall structures (in which cooling by conduction to the base plate is limited) or structures that are manufactured at low pressure (in which cooling by natural convection is limited). Accordingly, applications of DED for manufacture of larger components have hitherto been limited.

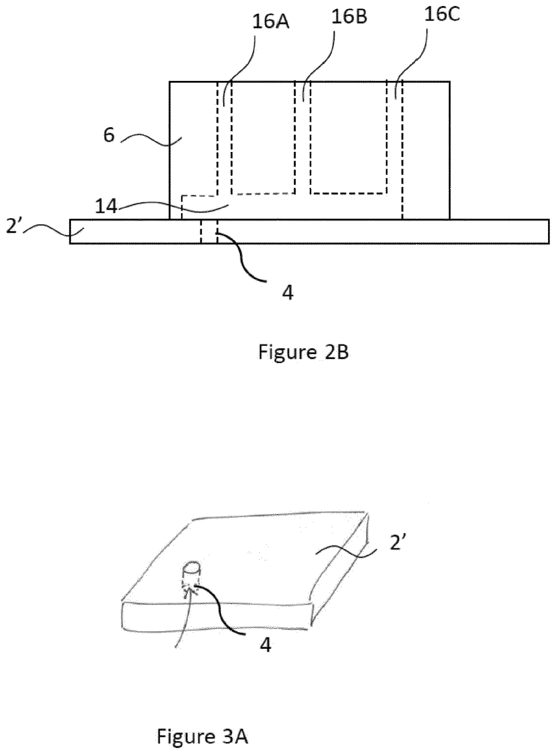

Figure 2 shows a base plate 2' in an embodiment of the present invention, which is in use in a method of manufacturing a component by additive manufacture in an embodiment of the present invention. A partially-formed component 8 having a sacrificial cooling structure 6 thereon is shown on the base plate 2'. Both the component and the cooling structure are manufactured using a DED method. As discussed above, the feedstock material is fed through the nozzle where it is subsequently melted using an arc or optionally a laser or an electron beam. The feedstock material can be supplied either as a wire or as powder, although wire is preferred in the present invention. For example, the feedstock material can be any one of titanium, stainless steel, aluminium, nickel or their alloys.

The base plate 2' can replace the base plate 2 shown in the system 1 illustrated in figure 1 and is used as a support for building the components by additive manufacturing. The base plate 2' comprises at least one opening 4, through which a cooling gas can be supplied to the manufactured structures. Although not shown in figures 2A-2B , it will be understood that a source of cooling gas must be provided in fluid communication with the opening 4. It is also understood that the cooling gas can be the same gas species as a process gas that is used within the manufacturing space.

The cooling/process gas enters the manufacturing space through the base plate 2' and flows continuously through one or more cooling channels in the cooling structure 6 as the build proceeds. Depending on the design of the component to be built, both the cooling structure 6 and the component 8 can be further extended by building up layers of material, to result in an extended geometry of the component further comprising subunits 10 and 12 being part of the cooling structure 6 and the component 8 respectively.

It will be understood that the design of the cooling channels within the cooling structure must ensure that the cooling channels are in fluid communication with the inlet 4 for as much as possible of the build time. Figure 2B shows a cross section through the cooling structure 6 shown in figure 2A with the cooling channels illustrated. As can be seen in figure 2B, the opening 4 in the base plate 2 is in communication with a manifold 14 that is formed within the cooling structure 6. Three channels 16A-16C extend upwards from the manifold. Accordingly, cooling gas that enters the manufacturing space via the opening 4 enters the manifold 14 and passes through the cooling channels 16A-C into the open manufacturing space 20, thereby providing a relatively uniform cooling effect to the component 8. It will be understood that, when the initial layers of the cooling structure 6 are deposited, the manifold 14 may not yet be completed and formation of the cooling channels may not yet have begun, so cooling of the component 8 by gases flowing through the cooling structure 6 may not yet be possible. However, this is unlikely to have an adverse effect on the quality of the component, as conduction into the base plate 2' is likely to provide adequate cooling during deposition of the initial layers. If this was found to be inadequate for a particular component for any reason, then a sacrificial base could be deposited adjacent to the manifold 14, and the component 8 could be built on top of the sacrificial base. Once the manufacturing of the component is complete, the sacrificial cooling structure, and any sacrificial base, is machined away to leave a component of the desired shape.

It will be understood that the shape of the manifold and channels shown in figure 2B is merely one example of the possible configuration of cooling channels within a sacrificial cooling structure 6, and that other configurations are also useful. For example, the opening 4 could communicate with a single serpentine channel, which could be extended by each new layer of material. Such a channel is shown in more detail below with respect to figures 3A-C.

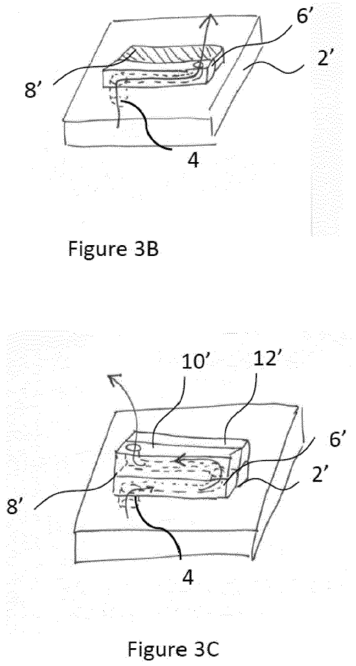

Figures 3A - 3C show a step-by-step process of building up a component using DED method. In figure 3A there is provided a base plate 2' comprising at least one opening 4' through which the cooling/process gas is supplied. Figure 3B shows the first step of the process wherein the first portion of the cooling structure 6' comprising at least one through channel for the cooling/process gas to pass through is built. It is understood that the first portion may comprise several layers of feedstock material deposited on top of one another so as to form the channel. Furthermore, any number of channels can be incorporated into the structure, the number and shape of these channel is defined by the complexity of the geometry of the component to be built. The first portion of the component 8' is built adjacent to the cooling structure. Again, the first portion of the component 8' may be formed from several layers of feedstock material deposited on top of one another, and these layers are preferably deposited at the same time as the corresponding layers of the cooling structure 6'. Once enough layers have been deposited so that an enclosed channel is formed in the cooling structure 6', the cooling/process gas is introduced through the opening 4 of the base plate into the channel of the cooling structure, thus cooling the component 8'.

Figure 3C shows the second portion of the cooling structure 6' in which the serpentine channel is extended so as to double back on itself on top of the first portion. As described in the previous figure, the cooling/process gas flow through the channel so as to cool the cooling structure 6' and the component 8'. It is understood that the steps of the process are repeated until the building of the component is complete. The cooling structure is then machined away to leave a component of the desired shape and free of thermal distortion, stresses and surface oxidation.

It is understood that the shape of the component is not restricted to a flat horizontal wall and the cooling structure is not restricted to a shape comprising one pipeline adjacent to the component, as depicted in Figures 2A-2B and 3A-3C, and other suitable shapes and sizes can be employed.

Although the machining of the component to remove the sacrificial cooling structure 6' and to refine the shape of the component 8' may be performed in a separate machining apparatus, in some embodiments the apparatus for making the component by DED may also comprise one or more machining heads that are used to perform the required machining operations after the DED process finishes. A manufacturing system having the capability to perform both additive manufacture and machining operations may be referred to as a hybrid manufacturing system.

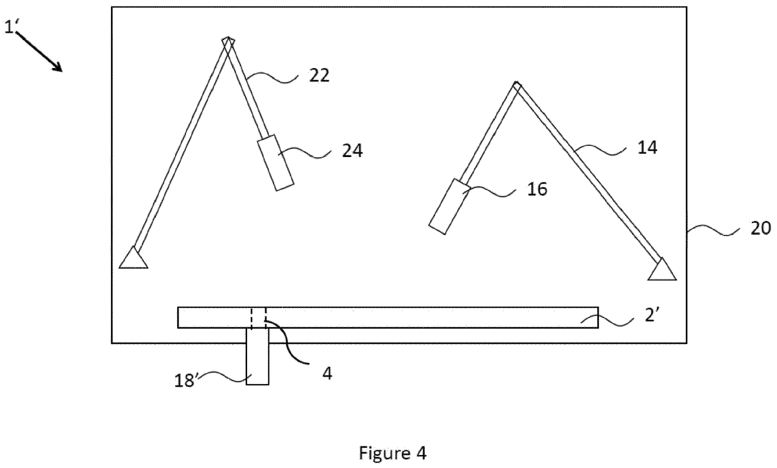

Figure 4 shows a hybrid manufacturing system 1' in an embodiment of the present invention. The system 1' comprises a deposition head 16 for use in a DED additive manufacturing process. The deposition head 16 is mounted on a first robot arm 14. The system 1' also comprises a machining tool 24 mounted on a second robot arm 22. The base plate 2' is similar to the base plate 2' shown in figures 2 and 3, and is provided with an opening 4 through which gas may enter a sacrificial cooling structure on a component being made by DED. In the embodiment shown in figure 4, the opening 4 is arranged to receive gas from the atmospheric control subsystem 18'. As will be understood by the skilled person, the system 1' shown in figure 4 may be used to manufacture components by producing a near-net shape component by a DED process using the deposition head 16, and subsequently machining the near-net shape component to the required shape using the machining tool 24. During the DED process, cooling gas may enter a sacrificial cooling structure of the component via the opening 4.

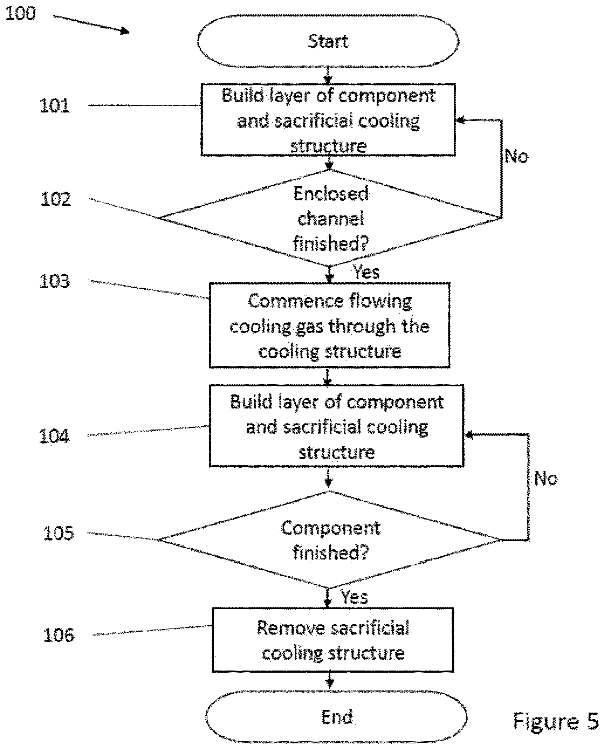

A method of manufacturing a component within a manufacturing space in an embodiment of the present invention will be described in more detail below, with respect to Figure 5.

Figure 5 shows a method 100 which is implemented by a controller. In step 101 the controller is arranged to start building a component 8 including a sacrificial cooling structure 6 on the base plate 2. In step 102 it is determined whether or not an enclosed channel of the cooling structure is complete. If the enclosed channel is complete, the method proceeds to step 103, in which the cooling gas is then flowed through the opening 4 of the base plate into the channel to cool the component. Otherwise, the method returns to step 101.

In step 104 the controller is arranged to continue building the cooling structure 6 and component 8, whilst the flow of cooling gas through the enclosed channel is maintained. In step 105 the controller is arranged to determine if the component is complete. If the component is complete, the method proceeds to step 106, in which the cooling structure 6 is machined away, after which the method ends. If it is determined that the component is not complete at step 105, then the method returns to the step 104 where additional layers of the cooling structure and component are built. until it is determined that the component is finished in step 105.

As will be understood by the skilled person, the method shown in figure 5 may be performed entirely within a hybrid manufacturing system as shown in figure 4, or the steps could be split between different manufacturing systems.

It is understood that in all of the above embodiments, the cooling/process gas can be fresh refrigerated or cryogenic gas, or optionally it can be recirculated and/or purified gas. The choice of gas depends on the metal or the alloy used to manufacture the component 8. The most suitable gases are therefore inert gases. The cooling/process gas can be any one of argon, helium or nitrogen. However, it is preferential to have a cooling gas free of nitrogen when titanium or titanium alloys are used in the process of building the component, as it can form undesired nitrides with the titanium at high process temperatures. The presence of oxygen is also unwanted as the dielectric oxide layers can form on the surface of the component 8. It is therefore preferential if the concentration of oxygen in the cooling/process gas is as low as possible, for example less than 100 or ppm or less than 10ppm. However, it is a particular advantage of the present invention that the sacrificial cooling structure 6 allows the component 8 to be rapidly cooled to a temperature at which it does not react with gases in the manufacturing space. As such, it may be acceptable to have a higher concentration of reactive gas species within the manufacturing space than would have been the case for prior art DED manufacturing methods.

As described above, the cooling/process gas is typically admitted to the structure to be built through one or more openings 4 in the base plate that communicate with one or more enclosed channels in the cooling structure and is ultimately released into the chamber. The cooling/process gas can be circulated and channelled through the sacrificial cooling structure 6 by a number of different methods:
- by recirculating process gas from within the chamber with the use of a suitable gas pump or compressor;
- with the inclusion of a suitable cooler in addition to the pump described above, whereby the process gas is cooled to a suitable temperature in order to optimize the heat removal process. The cooler can have various embodiments including, but not limited to: i) a water- or air-cooled heat exchanger; ii) an electrical refrigeration unit; iii) a cooling device using a suitable cryogenic liquid such as liquid nitrogen as cooling medium;
- by admitting fresh process gas through the sacrificial cooling structure 6, whereby this fresh process gas contributes to any required purging process in the chamber. In this embodiment, the cooling/process gas can become part of the general chamber atmosphere control subsystem 18', as shown in figure 4.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### LIST OF REFERENCE SIGNS

- 1, 1': Manufacturing system
- 2, 2': Base plate
- 4: Opening
- 6, 6', 10, 10': Cooling Structure
- 8, 8', 12, 12': Component
- 14, 22: Robot arm
- 15: Manifold
- 16: Enclosed channel
- 18, 18': Atmospheric control subsystem
- 20: Enclosure
- 24: Machining head

## Claims

1. A method (100) for producing a component (8, 12) by a directed energy deposition additive manufacture process, the method comprising the steps of:
depositing a plurality of layers of feedstock material onto a base plate (2) and melting the feedstock material as it is deposited, thereby to form an initial structure, wherein the initial structure includes a sacrificial cooling structure (6) having at least one enclosed channel (16A-C);
providing a cooling gas through enclosed channel of the sacrificial cooling structure; and removing the sacrificial cooling structure from the initial structure to form the component.

2. The method (100) of claim 1, wherein the feedstock material comprises a wire.

3. The method (100) of claim 1 or claim 2, wherein the feedstock material is melted by an electrical arc.

4. The method (100) of any preceding claim, wherein the cooling gas is supplied to the enclosed channel through an opening (4) in a base plate.

5. The method (100) of any preceding claim, wherein the cooling gas is a process gas.

6. The method (100) of any preceding claim, wherein the cooling gas is a cryogenic gas.

7. The method (100) of claim 5 or 6, wherein the cooling gas is any one of argon, helium or nitrogen.

8. The method (100) of any preceding claim, wherein the sacrificial cooling structure is removed by machining the sacrificial cooling structure away from the manufactured part.

9. The method (100) of any preceding claim, wherein the feedstock material is titanium, stainless steel, aluminium or an alloy of titanium, stainless steel or aluminium.

10. The method (100) of any preceding claim, wherein the cooling gas is recirculated in the manufacturing space by means of a pump.

11. The method (100) of any preceding claim, wherein the cooling gas is further cooled by a heat exchanger.

12. An apparatus (1, 1') for producing components (6) by a direct energy deposition additive manufacturing process, the apparatus comprising:
- a manufacturing space (20), said space further comprising a base plate (2'),
- a heat source,
- a source of feedstock material,
- a source of cooling gas (18),
- a controller that is arranged to control the manufacturing process,
wherein the base plate (2') comprises an opening for providing the cooling gas into the manufacturing space via a sacrificial cooling structure on the component.
